# EUROPEAN PATENT APPLICATION

(11) **EP 4 216 345 A1**
(43) Date of publication of application: **26.07.2023**
(21) Application number: 22216140.8
(22) Date of filing: 22.12.2022
(51) Int. Cl.: H01M 50/107, H01M 50/152, H01M 50/169, H01M 50/171

(54) **SECONDARY BATTERY**

(30) Priority: 19.01.2022 KR 20220007828
(71) Applicant: Samsung SDI Co., Ltd., Yongin-si, Gyeonggi-do 17084 (KR)
(72) Inventor: JUNG, Hyun Ki, 17084 Yongin-si (KR)
(74) Representative: Marks & Clerk LLP

(57) **Abstract**

A secondary battery includes: an electrode assembly; a case accommodating the electrode assembly; a current collector plate welded to the electrode assembly and the case; and a cap plate on the current collector plate and sealing the case.

## Description

### BACKGROUND

### 1. Field

Aspects of embodiments of the present disclosure relate to a secondary battery.

### 2. Description of the Related Art

Different from a primary battery, which is not designed to be charged (or recharged), a secondary battery is designed to be (re)charged and discharged. Low-capacity secondary batteries are used in portable small-sized electronic devices, such as a smart phone, a feature phone, a tablet computer, a notebook computer, a digital camera, a camcorder, and the like, and high-capacity secondary batteries are extensively used as batteries for driving a motor for a hybrid car, an electric vehicle, and the like, and power storage cell batteries.

A secondary battery generally includes an electrode assembly having a positive electrode and a negative electrode, a case accommodating the electrode assembly, and a terminal connected to the electrode assembly. The secondary battery can be classified into a cylindrical type, a prismatic type, a pouch type, and so on according to its shape. As one example, the cylindrical secondary battery generally includes an electrode assembly, a can, a cap assembly, a gasket for insulating the can and the cap assembly, etc. A negative electrode member of the electrode assembly is electrically connected to the bottom of the can so that the can has a negative polarity, and a positive electrode member of the electrode assembly is electrically connected to the terminal of the cap assembly so that the cap assembly has a positive polarity.

The above information disclosed in this Background section is for enhancement of understanding of the background of the present disclosure and, therefore, it may contain information that does not constitute prior art.

### SUMMARY

An embodiment of the present disclosure provides a secondary battery having improved structural stability.

A secondary battery, according to an embodiment of the present disclosure, includes: an electrode assembly; a case accommodating the electrode assembly; a current collector plate welded to the electrode assembly and the case; and a cap plate on the current collector plate and sealing the case.

In addition, the current collector plate may include a disc-shaped body, an electrode welding portion inside the body and welded to the electrode assembly, and a case welding portion outside of the body and welded to the case.

In addition, a slit may be between the body and the electrode welding portion.

In addition, the slit may be C-shaped or U-shaped.

In addition, the case welding portion may extend from the body toward the case.

In addition, the case welding portion may be welded to a beading part of the case.

In addition, the current collector plate may further include a bent portion that is bent in the direction of the cap plate inside the case welding portion.

In addition, the current collector plate may have a through hole corresponding to a center of the cap plate.

In addition, the secondary battery may further include an insulating gasket between the case welding portion and the cap plate.

In addition, an outer diameter of the current collector plate may be greater than an outer diameter of the electrode assembly.

At least some of the above and other features of the invention are set out in the claims.

### BRIEF DESCRIPTION OF DRAWINGS

FIG. 1 is a cross-sectional view of a secondary battery according to an embodiment of the present disclosure.
FIG. 2 is an enlarged view of the part II of FIG. 1.
FIG. 3 is a plan view of a first current collector plate of the secondary battery according to an embodiment of the present disclosure.

### DETAILED DESCRIPTION

Hereinafter, embodiments of the present disclosure will be described, in detail, with reference to the accompanying drawings.

Examples of the present disclosure are provided to more fully explain the aspects and features of the present disclosure to those skilled in the art, and the following embodiments may be modified in various other forms. That is to say, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

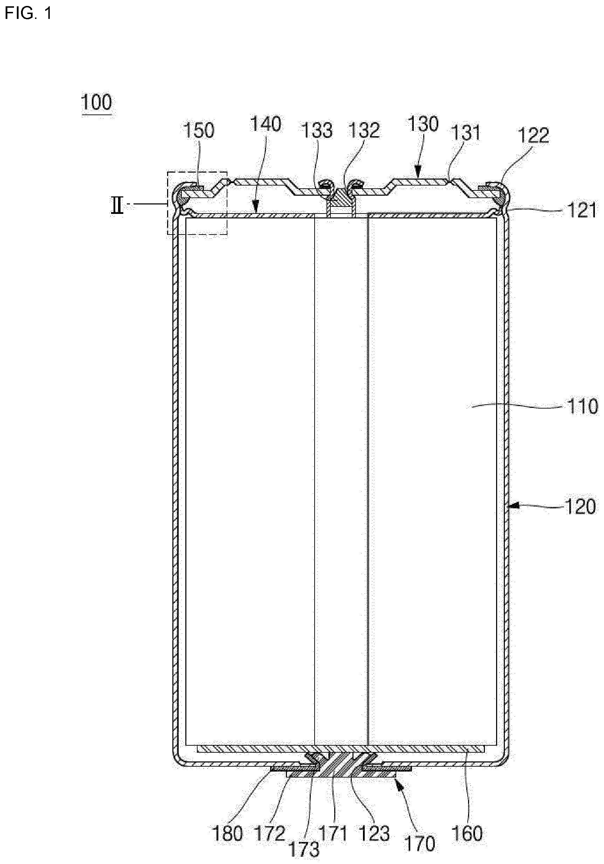

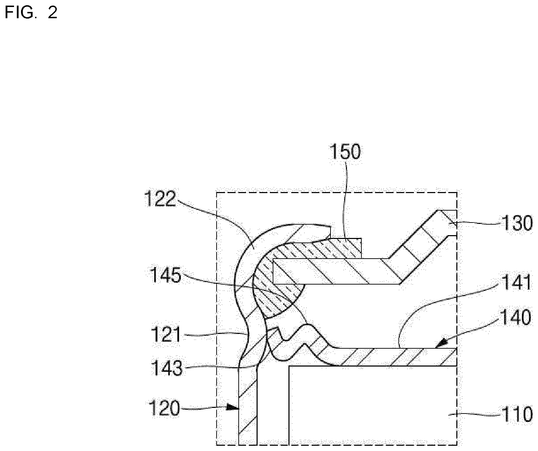

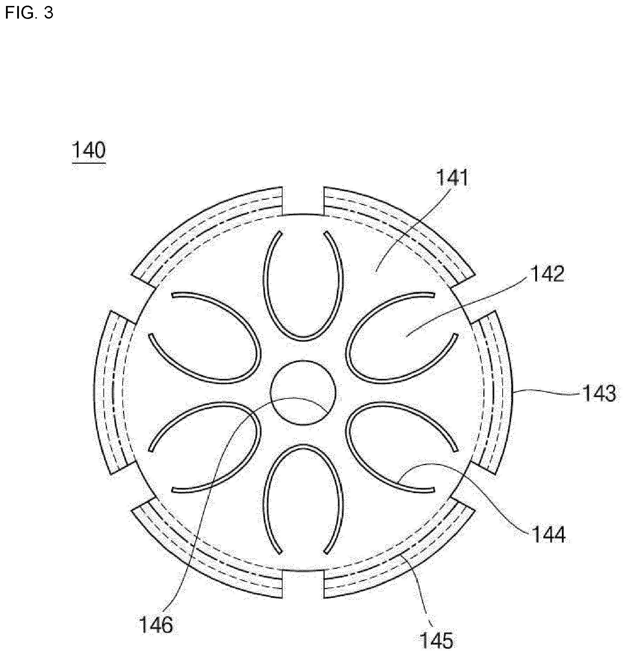

FIG. 1 is a cross-sectional view of a secondary battery 100 according to an embodiment of the present disclosure, FIG. 2 is an enlarged view of the part II of FIG. 1, and FIG. 3 is a plan view of a first current collector plate 140 of the secondary battery 100 according to an embodiment of the present disclosure.

Referring to FIGS. 1 and 2, a secondary battery 100 according to an embodiment of the present disclosure includes an electrode assembly 110, a case 120, a cap plate 130, a first current collector plate 140, and a first insulating gasket 150, a second current collector plate 160, a rivet terminal 170, and a second insulating gasket 180.

The electrode assembly 110 includes a first electrode plate, a second electrode plate, and a separator.

The first electrode plate may be any one of a negative electrode plate and a positive electrode plate. When the first electrode plate is a negative electrode plate, the first electrode plate may have a negative electrode coated portion at where a negative electrode active material is coated on a negative electrode current collector plate made of a conductive metal thin plate, for example, a copper or nickel foil or mesh, and a negative electrode uncoated portion at where the negative electrode active material is not coated. The negative electrode active material may include, for example, a carbon-based material, Si, Sn, tin oxide, a tin alloy composite, a transition metal oxide, lithium metal nitrite, or a metal oxide, but the present disclosure is not limited thereto.

The second electrode plate may be any one of a negative electrode plate and a positive electrode plate. When the first electrode plate is a negative electrode plate, as described above, the second electrode plate may be a positive electrode plate. In such an embodiment, the second electrode plate may have a positive electrode coated portion at where a positive electrode active material is coated on a positive electrode current collector plate made of a highly conductive metal thin plate, for example, an aluminium foil or mesh, and a positive electrode uncoated portion at where the positive electrode active material is not coated. The positive electrode active material may include, for example, a chalcogenide compound, for example, a composite metal oxide, such as LiCoO₂, LiMn₂O₄, LiNiO₂, or LiNiMnO₂, but the present disclosure is not limited thereto.

The separator is interposed between the first electrode plate and the second electrode plate and prevents an electrical short between the first electrode plate and the second electrode plate. The separator may be made of, for example, polyethylene, polypropylene, a porous copolymer of polyethylene and polypropylene, and the like, but the present disclosure is not limited thereto.

The electrode assembly 110 may be stacked in the order of a first electrode plate, a separator, a second electrode plate, and a separator and wound in a so-called jelly-roll shape. In some embodiments, a negative electrode uncoated portion is positioned at one end of the electrode assembly 110 (e.g., at one end of the electrode assembly 110 in an axial direction thereof), and a positive electrode uncoated portion is arranged at the other end (e.g., the opposite end) of the electrode assembly 110. Hereinafter, an embodiment in which the negative electrode uncoated portion is positioned at the upper end of the electrode assembly 110 and the positive electrode uncoated portion is arranged to be positioned at the lower end of the electrode assembly 110 will be described in more detail.

The case 120 has a cylindrical shape in which one side (e.g., one end) is open and the other side (e.g., the other end) is closed to accommodate the electrode assembly 110. In the drawings, the upper end (or the upper surface) of the case 120 is open and the lower end (or lower surface) thereof is closed.

The case 120 may include a beading part (e.g., a bead) 121 that is recessed inwardly at an upper portion thereof to prevent the cap plate 130 from moving (or falling) downwardly and a crimping part (e.g., a crimp) 122 that is bent inwardly at the upper portion to prevent the cap plate 130 from being separated from the case 120 upwardly.

The case 120 may include a rivet hole (e.g., a rivet opening) 123 for installing the rivet terminal 170 on the lower surface.

The cap plate 130 is coupled to the upper end of the case 120 and seals the upper surface of the case 120. For example, in a state in which the first insulating gasket 150 is interposed between the case 120 and the cap plate 130, the cap plate 130 is seated on the beading part 121 of the case 120, and the crimping part 122 is formed by inwardly bending the upper end of the case 120, thereby fixing the cap plate 130.

The cap plate 130 may include a safety vent 131 and an electrolyte injection hole (e.g., an electrolyte injection opening) 132.

The safety vent 131 prevents the secondary battery 100 from exploding by automatically releasing excess gas and pressure when gas is generated inside the secondary battery 100. To this end, the safety vent 131 may be formed as a notch for inducing an incision in the cap plate 130.

The electrolyte injection hole 132 is for injecting an electrolyte into the inside of the secondary battery 100 after assembling the secondary battery 100 and is closed by a plug 133 after the electrolyte is injected. The electrolyte injection hole 132 may be provided at the center of the cap plate 130.

The first current collector plate 140 is in contact with the upper end (e.g., the negative uncoated portion) of the electrode assembly 110 and is electrically connected to the case 120. Therefore, the case 120 has a negative polarity.

Additionally referring to FIG. 3, the first current collector plate 140 includes a body 141, an electrode welding portion 142, and a case welding portion 143.

The body 141 has a disk shape to correspond to the case 120.

The electrode welding portion 142 of the first current collector plate 140 is to be welded to the electrode assembly 110 and is provided inside the body 141. In the drawing, the electrode welding portion 142 includes multiple (e.g., six) electrode welding portions, which are shown as being arranged at regular intervals along the circumferential direction of the body 141. The number, size, shape, arrangement, etc. of the electrode welding portions 142 may be suitable varied.

The case welding portion 143 of the first current collector plate 140 is to be welded to the case 120 and is provided outside the body 141. For example, the case welding portion 143 extends from the body 141 outwardly toward the case 120. In the drawing, the case welding portion 143 includes multiple (e.g., six) case welding portions, which are shown as being arranged at regular intervals along the circumferential direction of the body 141. The number, size, shape, arrangement, etc. of the case welding portions 143 may be suitably varied.

The case welding portion 143 is bent upwardly with respect to the body 141 and may be welded to the beading part 121 of the case 120. Accordingly, the case welding portion 143 is supported on the beading part 121 of the case 120, and thus, the first current collector plate 140 can be installed more stably.

Furthermore, the first current collector plate 140 may include a slit (e.g., an elongated opening) 144 between the body 141 and the electrode welding portion 142. The slit 144 may partially separate the electrode welding portion 142 from the body 141. Accordingly, when the electrode assembly 110 flows (e.g., moves or expands and contracts) in a state in which the electrode welding portion 142 is welded to the electrode assembly 110, the electrode welding portion 142 may also flow or deform relative to the body 141, thereby preventing other parts of the first current collector plate 140 from being unintentionally deformed or twisted. The slit 144 is formed to partially surround (e.g., surround in a plan view or extend around a periphery of) the electrode welding portion 142. In the drawings, the slit 144 is illustrated as being formed in a C-shape or U-shape, but this is merely an example.

The first current collector plate 140 includes a bending part 145 that is additionally bent inside the case welding portion 143. In the drawing, the bending part 145 is illustrated as being bent upwardly once more toward the cap plate 130, but the number of corrugations (e.g., bends) may be increased or decreased. In forming the crimping part 122 by inwardly bending the upper end of the case 120 after installing the first current collector plate 140 on the electrode assembly 110 and installing the cap plate 130 on the first current collector plate 140, the upper portion of the case 120 may be slightly deformed inwardly as a whole. Here, the deformation may be absorbed by the bending part 145, thereby preventing other parts of the first current collector plate 140 from being unintentionally deformed or twisted.

The first current collector plate 140 may include a through hole (e.g., an opening) 146 through which an electrolyte may flow when the electrolyte is injected. The through hole 146 may be provided in a region of the first current collector plate 140 corresponding to (e.g., aligned with) the center of the cap plate 130.

The overall outer diameter of the first current collector plate 140 is larger than the outer diameter of the electrode assembly 110.

The first insulating gasket 150 is disposed between the cap plate 130 and the first current collector plate 140 (e.g., the case welding portion 143 of the first current collector plate 140) to electrically insulate the cap plate 130 and the first current collector plate 140 from each other. The first insulating gasket 150 is disposed between the case 120 and the cap plate 130 to electrically insulate the case 120 and the cap plate 130 from each other. As a result, the cap plate 130 itself is non-polar.

The second current collector plate 160 is in contact with the lower end of the electrode assembly 110 (e.g., the positive electrode uncoated portion) and is electrically connected to the rivet terminal 170. Therefore, the rivet terminal 170 has a positive polarity.

Similar to the first current collector plate 140, the second current collector plate 160 has a body formed in a disk shape corresponding to the case 120, and an electrode welding portion is provided inside the body to be welded to the electrode assembly 110. The electrode welding portion of the second current collector plate 160 may have a slit therein to partially separate the electrode welding part from the body. Because the features of the second current collector plate 160 are similar to those of the first current collector plate 140 as described above, a repeat description thereof is omitted.

The rivet terminal 170 is installed in the rivet hole 123 in the case 120. The rivet terminal 170 is installed literally in the form of a rivet and may include, for example, a shaft 171 inserted through the rivet hole 123 of the case 120, a first flange 172 extending beyond the edge of the rivet hole 123 in a radially outward direction from the lower end of the shaft 171, and a second flange 173 extending beyond the edge of the rivet hole 123. Therefore, the second current collector plate 160 and the upper end of the shaft 171 and/or the upper end of the second flange 173 are in contact with each other.

The second insulating gasket 180 is disposed between the case 120 and the rivet terminal 170 and electrically insulates the case 120 and the rivet terminal 170 from each other.

As described above, embodiments the present disclosure provide a secondary battery capable of maintaining structural stability by welding a current collector plate to an electrode assembly and a case, respectively, and electrically connecting the same.

Further, the electrode welding portion, which is welded to the electrode assembly, may be at least partially separated from the body by a slit, and thus, when the electrode assembly flows, the electrode welding portion can also flow or deform relative to the body. Accordingly, other parts of the first and/or second current collector plate may not unintentionally deform or twist, thereby further improving structural stability of the secondary battery.

In addition, a corrugation (e.g., a bent portion) may be formed in the case welding portion to be welded to the case, and thus, when the case is deformed, for example, to have a reduced diameter, the deformation can be absorbed through the bent portion. Accordingly, other parts of the first and/or second current collector plate may not unintentionally deform or distort, thereby further improving structural stability of the secondary battery.

The foregoing embodiments are only some embodiments of the secondary battery according to the present disclosure, which is not limited to the embodiment. It will be understood by a person skilled in the art that various changes in form and details may be made to the described embodiments without departing from the scope of the present disclosure as defined by the following claims and their equivalents.

## Claims

1. A secondary battery comprising:
an electrode assembly;
a case accommodating the electrode assembly;
a current collector plate welded to the electrode assembly and the case; and
a cap plate on the current collector plate and sealing the case.

2. The secondary battery of claim 1, wherein the current collector plate comprises:
a disc-shaped body;
an electrode welding portion inside the body and welded to the electrode assembly; and
a case welding portion outside of the body and welded to the case.

3. The secondary battery of claim 2, wherein a slit is between the body and the electrode welding portion.

4. The secondary battery of claim 3, wherein the slit is C-shaped or U-shaped.

5. The secondary battery of any one of claims 2 to 4, wherein the case welding portion extends from the body toward the case.

6. The secondary battery of claim 5, wherein the case welding portion is welded to a beading part of the case.

7. The secondary battery of any one of claims 2 to 6, wherein the current collector plate further comprises a bent portion that is bent in the direction of the cap plate inside the case welding portion.

8. The secondary battery of any one of claims 2 to 7, wherein the current collector plate has a through hole corresponding to a center of the cap plate.

9. The secondary battery of any one of claims 2 to 8, further comprising an insulating gasket between the case welding portion and the cap plate.

10. The secondary battery of any one of claims 1 to 9, wherein an outer diameter of the current collector plate is greater than an outer diameter of the electrode assembly.
